# EUROPÄISCHE PATENTANMELDUNG

(11) **EP 1 146 425 A2**
(43) Veröffentlichungstag der Anmeldung: **17.10.2001**
(21) Anmeldenummer: 01108590.9
(22) Anmeldetag: 05.04.2001
(51) Int. Cl.: G06F 11/267

(54) **Verfahren zum Prüfen der Funktionsfähigkeit einer Leiterplatte mit programmiertem Mikrocomputer einer elektrischen Steuer-oder Regeleinrichtung**

(30) Priorität: 12.04.2000 DE 10018172
(71) Anmelder: ROBERT BOSCH GMBH, 70442 Stuttgart (DE)
(72) Erfinder: Koenig, Markus, 73033 Goeppingen (DE); Rehfuss, Herbert, 73760 Ostfildern (DE)

(57) **Zusammenfassung**

Die Erfindung betrifft ein Verfahren zum Prüfen der Funktionsfähigkeit einer Leiterplatte einer elektrischen Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale für Aktoren abgegeben werden. Die Überprüfung der Funktionsfähigkeit der Leiterplatte am Einsatzort wird durch einen zusätzlichen Schaltkreis auf der Leiterplatte ermöglicht, der in einfachen Prüfschritten mit dem Mikrocomputer die Zuordnung der Eingangs-Signale zu den Ausgangs-Signalen gemäß dem vorgegebenen Programm überprüft.

## Beschreibung

### Stand der Technik

Die Erfindung betrifft ein Verfahren zum Prüfen der Funktionsfähigkeit einer Leiterplatte einer elektrischen Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale für Aktoren abgegeben werden.

Wird eine derartig bestückte Leiterplatte in einer Steuer- oder Regeleinrichtung eingesetzt, dann ist es wichtig, nach ihrer Herstellung einen 100 %igen Funktionstest vorzunehmen. Dazu ist ein eigenes Testsystem vorgesehen, wobei alle Eingänge durch steuerbare Spannungsquellen beaufschlagt werden und alle Ausgänge mit Messgeräten überwacht werden. Ein Prüfrechner steuert das Testsystem und überwacht die Reaktionen der Leiterplatte und stellt darüber deren Funktionsfähigkeit fest. Der erforderliche Messablauf benötigt Prüfzeiten von 1 bis 2 Minuten und aufwendige und teure Prüfeinrichtungen.

Ist die Leiterplatte am Einsatzort in Betrieb, kann das Wartungspersonal, insbesondere im Störungsfall, nicht auf einfache Weise die Funktionsfähigkeit der Leiterplatte überprüfen und die Fehlerstelle lokalisieren, es sei denn, es ist mit einem dafür geeigneten Prüfgerät ausgestattet. Die Überprüfung der Funktionsfähigkeit der Leiterplatte am Einsatzort ist daher aufwendig und teuer. Es kommt zudem immer wieder vor, dass das Wartungspersonal funktionsfähige Leiterplatten austauscht, was die Wartung zusätzlich verteuert.

Es ist Aufgabe der Erfindung, ein Verfahren der eingangs erwähnten Art zu schaffen, mit dem am Einsatzort die Funktionsfähigkeit der Leiterplatte auf einfache Weise überprüft werden kann.

Diese Aufgabe wird nach der Erfindung in gleich einfacher Weise sowohl dadurch gelöst, dass bei der Prüfung der Mikrocomputer über Prüfsignale angesteuert wird, die einer oder mehreren Funktionen zugeordnet sind, dass von dem Mikrocomputer an einen zusätzlichen Schaltkreis auf der Leiterplatte mitgeteilt wird, welche der zu prüfenden Funktion zugeordneten Eingänge mit welchen Eingangs-Signalen zu beaufschlagen sind und welche Ausgangs-Signale diesen zugeordnet sind, dass die der zu prüfenden Funktion zugeordneten Eingänge des Mikrocomputers vom zusätzlichen Schaltkreis mit den Eingangs-Signalen beaufschlagt werden und dass die dabei auftretenden Ausgangs-Signale im zusätzlichen Schaltkreis mit den vom Mikrocomputer mitgeteilten, zu erwartenden Ausgangs-Signale verglichen und auf Übereinstimmung oder Nichtübereinstimmung geprüft werden, als auch dadurch, dass bei der Prüfung der Mikrocomputer mit Prüfsignalen angesteuert wird, die einem oder mehreren der Ausgangs-Signale für die Aktoren zugeordnet sind, dass mittels eines zusätzlichen, auf der Leiterplatte angeordneten Schaltkreises die Ausgangs-Signale überwacht und in zugeordnete Eingangs-Signale umgesetzt werden, dass die umgesetzten Eingangs-Signale vom zusätzlichen Schaltkreis auf die Eingänge des Mikrocomputers gegeben werden und dass durch den Mikrocomputer die angelegten Eingangs-Signale und die den Prüfsignalen zugeordneten Ausgangs-Signale auf Übereinstimmung oder Nichtübereinstimmung der Zuordnung geprüft werden.

In jedem Fall wird durch unwesentlichen Mehraufwand auf der Leiterplatte und Einbeziehung eines einfachen, zusätzlichen Schaltkreises für das Wartungspersonal eine Möglichkeit geschaffen, die Funktionsfähigkeit der Leiterplatte mit dem programmierten Mikrocomputer zu prüfen.

Im ersten Fall werden die Prüfsignale den Funktionen zugeordnet und der Mikrocomputer versieht den zusätzlichen Schaltkreis mit den Daten, die er für die Überprüfung der zugeordneten Eingangs- und Ausgangs-Signale benötigt. Die Überprüfung auf Übereinstimmung oder Nichtübereinstimmung übernimmt der zusätzliche Schaltkreis der Leiterplatte. Wie der zweite Fall zeigt, können die Prüfsignale auch den Ausgangs-Signalen zugeordnet sein. Der zusätzliche Schaltkreis steuert den Mikrocomputer mit den zugeordneten Eingangs-Signalen an und der Mikrocomputer stellt fest, ob diese mit den durch das Prüfsignal vorgegebenen Ausgangs-Signalen korrespondiert. Die Überprüfung findet also auch noch im Mikrocomputer statt und die Leiterplatte kann bei der Prüfung in der Steuer- oder Regeleinrichtung eingebaut bleiben.

Mit der Abgabe der Prüfsignale kann das Wartungspersonal ohne externes Prüfgerät die Funktionsfähigkeit der Leiterplatte am Einsatzort auf einfache Weise überprüfen und im Störungsfall der Steuer- oder Regeleinrichtung die Fehlersuche erleichtern.

Ist nach einer Ausgestaltung vorgesehen, dass die Prüfsignale mittels Prüf-Tasten auf der Leiterplatte an den Mikrocomputer abgegeben werden, dann kann allein durch die Betätigung der Prüf-Tasten die Funktionsprüfung der Leiterplatte eingeleitet und durchgeführt werden.

Die Zuordnung der Prüf-Tasten ist dabei so wählbar, dass die Prüf-Tasten mit ihren Prüfsignalen einer bestimmten Funktion oder einem bestimmten Ausgangs-Signal des Mikrocomputers zugeordnet werden, oder dass eine Prüftaste mit seinem Prüfsignal allen Funktionen oder allen Ausgangs-Signalen zugeordnet werden und dass die Funktionen der Ausgangs-Signale in einem Programmablauf nacheinander überprüft werden.

Um das Wartungspersonal über das Ergebnis der Prüfung in Kenntnis zu setzen, sieht eine Weiterbildung vor, dass bei Übereinstimmung der Zuordnung eine grüne Leuchtdiode und bei Nichtübereinstimmung der Zuordnung eine rote Leuchtdiode eingeschaltet wird.

Diese Leuchtdioden können auf der Leiterplatte angeordnet und dem zusätzlichen Schaltkreis oder dem Mikrocomputer zugeordnet sein.

Die Erfindung wird anhand eines als schematisches Blockschaltbild dargestellten Ausführungsbeispiels näher erläutert, das sowohl nach dem Verfahren des Anspruches 1 als auch nach dem Verfahren des Anspruches 2 arbeiten kann.

Beiden Verfahren ist gemeinsam, dass die Leiterplatte LP den programmierten Mikrocomputer MC trägt, welcher über Eingangs-Signale von Sensoren S1 bis Sn angesteuert wird und entsprechend der programmierten Funktionen an den Ausgängen für die angeschalteten Aktoren A1 bis Am Ausgangssignale abgibt. Dabei kann das Programm des Mikrocomputers MC die verschiedensten Zuordnungen der Eingangs-Signale zu den Ausgangs-Signalen umfassen. Es kann ein Eingangs-Signal einem oder mehreren Ausgangs-Signalen zugeordnet werden. Mehrere Eingangs-Signale können einem einzelnen oder mehreren Ausgangs-Signalen zugeordnet sein. Der Mikrocomputer MC ist nur entsprechend zu programmieren und an die Betriebsbedingungen der Steuer- oder Regeleinrichtung anzupassen. Das Verfahren ist auch nicht auf einen Wert des Eingangs- und/ oder Ausgangs-Signals begrenzt.

Auf der Leiterplatte LP ist ein zusätzlicher Schaltkreis SK angeordnet und wie die Verbindungslinien zeigen, mit den Eingängen und Ausgängen des Mikrocomputers MC verbunden. Zudem kann der Schaltkeis SK über Leitungen auch mit zusätzlichen Ausgängen des Mikrocomputers MC verbunden sein.

Zur Durchführung des erfindungsgemäßen Prüfverfahrens kann der Mikrocomputer MC mit Prüfsignalen W1, W2, Wm und Wp beaufschlagt werden. Diese Prüfsignale kennzeichnen mit W1 bis Wm m unterschiedliche Prüfungen, die einzelnen Funktionen zugeordnet sind. Mit dem Prüfsignal Wp wird dem Mikrocomputer MC mitgeteilt, dass die Prüfung aller Funktionen im Programm überprüft werden sollen. Die Abgabe der Prüfsignale erfolgt in einfachster Weise über auf der Leiterplatte LP angeordnete und verdrahtete Prüf-Tasten. Anhand der betätigten Prüf-Taste stellt der Mikrocomputer MC dem Schaltkreis SK die der Funktion zugeordneten Eingangs- und Ausgangs-Signale zur Verfügung. Über den Schaltkreis SK werden an die Eingänge des Mikrocomputers MC die vom Mikrocomputer MC erhaltenen Eingangs-Signale angelegt und die dabei erhaltenen Ausgangs-Signale mit den vom Mikrocomputer MC erhaltenen Ausgangs-Signale verglichen und auf Übereinstimmung oder Nichtübereinstimmung der für die geprüfte Funktion vorgesehene Zuordnung überprüft. Bei Übereinstimmung leuchtet eine grüne Leuchtdiode Lg und bei Nichtübereinstimmung eine rote Leuchtdiode Lr auf, um dem Wartungspersonal das Ergebnis der Prüfung anzuzeigen.

Wird das Prüfsignal Wp an den Mikrocomputer MC abgegeben, dann werden nacheinander alle Funktionen in einem Prüf-Programmablauf in gleicher Weise überprüft. Das Wartungspersonal ist dann 100 %ig über die Funktionsfähigkeit der Leiterplatte LP mit dem Mikrocomputer MC informiert. Die Prüfung kann auch in der Weise ablaufen, dass den Prüfsignalen W1, W2, Wm und Wp einzelne Ausgangs-Signale oder alle Ausgangs-Signale des Programmes zugeordnet sind. Der zusätzliche Schaltkreis SK überwacht die Ausgangs-Signale, die in Abhängigkeit des Prüfsignals vom Mikrocomputer MC abgegeben werden und führt den Eingängen die zugeordneten Eingangs-Signale zu. Der Mikrocomputer MC kann dann selbst überprüfen, ob die Zuordnung der geprüften Funktion in Ordnung ist oder nicht dem Programm entspricht. Die Anzeige wird entsprechend über die Leuchtdioden Lg oder Lr vorgenommen.

Auch bei diesem Verfahrensablauf bleibt der Aufwand für den zusätzlichen Schaltkreis SK vertretbar, wird dafür jedoch die Wartung am Einsatzort erheblich vereinfacht und die Auswechslung funktionsfähiger Leiterplatten LP vermieden. Zudem kann bei der Herstellung der Leiterplatte LP der Funktionstest vereinfacht oder sogar entfallen und nur auf elektrische Prüfungen, wie Spannungsfestigkeit, Isolation und dgl. beschränkt werden.

Die Prüfsignale W1, W2, Wm, Wp und die Ergebnisse der Prüfungen lassen sich auch über geeignete Schnittstellen von entfernten Orten übertragen und an diese zurückmelden.

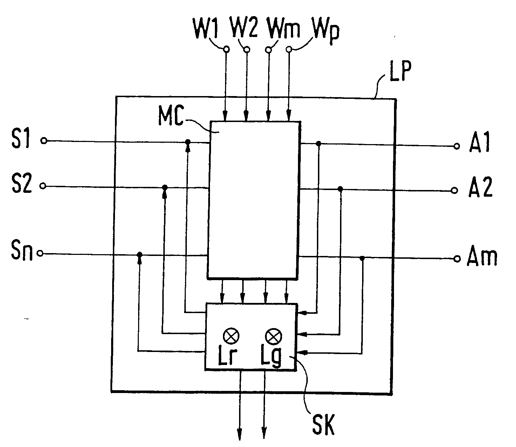

## Patentansprüche

1. Verfahren zum Prüfen der Funktionsfähigkeit einer Leiterplatte einer elektrischen Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale für Aktoren abgegeben werden,
**dadurch gekennzeichnet,**
**dass** bei der Prüfung der Mikrocomputer (MC) über Prüfsignale (W1, W2, Wm, Wp) angesteuert wird, die einer oder mehreren Funktionen zugeordnet sind,
**dass** von dem Mikrocomputer (MC) an einen zusätzlichen Schaltkreis (SK) auf der Leiterplatte (LP) mitgeteilt wird, welche der zu prüfenden Funktion zugeordneten Eingänge mit welchen Eingangs-Signalen zu beaufschlagen sind und welche Ausgangs-Signale diesen zugeordnet sind,
**dass** die der zu prüfenden Funktion zugeordneten Eingänge des Mikrocomputers (MC) vom zusätzlichen Schaltkreis (SK) mit den Eingangs-Signalen beaufschlagt werden und
**dass** die dabei auftretenden Ausgangs-Signale im zusätzlichen Schaltkreis (SK) mit den vom Mikrocomputer (MC) mitgeteilten, zu erwartenden Ausgangs-Signale verglichen und auf Übereinstimmung oder Nichtübereinstimmung geprüft werden.

2. Verfahren zum Prüfen der Funktionsfähigkeit einer Leiterplatte einer elektrischen Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale für Aktoren abgegeben werden,
**dadurch gekennzeichnet,**
**dass** bei der Prüfung der Mikrocomputer (MC) mit Prüfsignalen (W1, W2, Wm, Wp) angesteuert wird, die einem oder mehreren der Ausgangs-Signale für die Aktoren (A1, A2, Am) zugeordnet sind,
**dass** mittels eines zusätzlichen, auf der Leiterplatte (LP) angeordneten Schaltkreises (SK) die Ausgangs-Signale überwacht und in zugeordnete Eingangs-Signale umgesetzt werden,
**dass** die umgesetzten Eingangs-Signale vom zusätzlichen Schaltkreis (SK) auf die Eingänge des Mikrocomputers (MC) gegeben werden und
**dass** durch den Mikrocomputer (MC) die angelegten Eingangs-Signale und die den Prüfsignalen (W1, W2, Wm, Wp) zugeordneten Ausgangs-Signale auf Übereinstimmung oder Nichtübereinstimmung der Zuordnung geprüft werden.

3. Verfahren nach Anspruch 1 oder 2,
**dadurch gekennzeichnet,**
**dass** die Prüfsignale (W1, W2, Wm, Wp) mittels Prüf-Tasten auf der Leiterplatte (LP) an den Mikrocomputer (MC) abgegeben werden.

4. Verfahren nach einem der Ansprüche 1 bis 3,
**dadurch gekennzeichnet,**
**dass** die Prüf-Tasten mit ihren Prüfsignalen (W1, W2, Wm) einer bestimmten Funktion oder einem bestimmten Ausgangs-Signal des Mikrocomputers (MC) zugeordnet werden.

5. Verfahren nach einem der Ansprüche 1 bis 3,
**dadurch gekennzeichnet,**
**dass** eine Prüftaste mit seinem Prüfsignal (Wp) allen Funktionen oder allen Ausgangs-Signalen zugeordnet werden und
**dass** die Funktionen der Ausgangs-Signale in einem Programmablauf nacheinander überprüft werden.

6. Verfahren nach einem der Ansprüche 1 bis 5,
**dadurch gekennzeichnet,**
**dass** bei Übereinstimmung der Zuordnung eine grüne Leuchtdiode (Lg) und bei Nichtübereinstimmung der Zuordnung eine rote Leuchtdiode (Lr) eingeschaltet wird.

7. Verfahren nach einem der Ansprüche 1 oder 2,
**dadurch gekennzeichnet,**
**dass** die Prüfsignale (W1, W2, Wm, Wp) über eine Schnittstelle aus der Ferne an den Mikrocomputer (MC) übertragen werden und
**dass** die den Prüfschritten zugeordneten Prüfergebnisse an diesen Ort zurückgemeldet werden.
